# EUROPÄISCHE PATENTSCHRIFT

(11) **EP 2 591 264 B1**
(45) Veröffentlichungstag und Bekanntmachung des Hinweises auf die Patenterteilung: **16.12.2015**
(21) Anmeldenummer: 10732670.4
(22) Anmeldetag: 09.07.2010
(51) Int. Cl.: F16L 33/025

(54) **SCHLAUCHKLEMME**
HOSE CLAMP
COLLIER DE SERRAGE POUR FLEXIBLE

(43) Veröffentlichungstag der Anmeldung: 15.05.2013
(73) Patentinhaber: Oetiker Schweiz AG, 8810 Horgen (CH)
(72) Erfinder: MIESSMER, Stefan, CH-8004 Zürich (CH)
(74) Vertreter: Strehl Schübel-Hopf & Partner
(86) Internationale Anmeldenummer: PCT/EP2010/004205
(87) Internationale Veröffentlichungsnummer: WO 2012/003851

(56) Entgegenhaltungen:
- WO-A1-02/50468
- WO-A1-2009/152832
- US-A- 5 070 580
- US-A- 5 111 555

## Beschreibung

### Stand der Technik

Schlauchklemmen mit einer ohrartigen Spanneinrichtung, dem sogenannten Oetiker-Ohr, werden dadurch um den etwa einen Rohrnippel umgebenden Schlauch gespannt, dass das "Spannohr", das aus zwei nach außen ragenden Schenkeln und einem diese verbindenden Brückenteil besteht, mittels einer Zange oder einem zangenartigen Spannwerkzeug verengt wird. Abhängig von der Dimensionierung der Schlauchklemme werden sich die inneren Enden der Schenkel im gespannten Zustand nahezu berühren. Die Klemme gilt bei Anwendung der spezifizierten Schliesskraft als korrekt geschlossen, sofern das Ohr zur Erreichung einer 50 %-igen Durchmesserreduktion entsprechend reduziert wird. Die Differenz von dieser Position bis zu dem Punkt, wo sich die inneren Enden der Schenkel im gespannten Zustand nahezu berühren, ist der Spannbereich der Klemme.

Ein Problem bei dieser Art von Spanneinrichtung besteht darin, dass sich das verengte Spannohr beim Abnehmen des Spannwerkzeugs aufgrund der Elastizität des Schlauchs und auch des Klemmbandes selbst wieder etwas aufweitet. Diese Aufweitung bedeutet eine Verringerung der auf den Schlauch ausgeübten Spannkraft, was in Grenzbereichen zu einer Undichtigkeit führen kann.

Theoretisch wäre es möglich, die Aufweitung durch Verwendung eines härteren oder dickeren Klemmbandmaterials zu begrenzen. Abgesehen von den sich dann ergebenden höheren Materialkosten ist die Verwendung eines härteren oder dickeren Materials außerhalb des Spannohrs auch deshalb unerwünscht, weil die Schlauchklemme eine bestimmte Elastizität haben soll, um Unregelmäßigkeiten im Schlauch und dem von diesem umspannten Gegenstand (Rohrnippel) auszugleichen.

Aus US 5,070,580 ist es bekannt, das Spannohr durch eine auf dieses aufgesetzte äußere Spange aus erheblich stärkerem Material zu verstärken und beim Spannen die Spange samt dem Spannohr zu verengen. Die Spange stellt ein zusätzliches Bauteil dar, das die Herstellkosten erhöht und den Einbauvorgang der Schlauchklemme komplizierter macht. Außerdem stellt das durch die Spange verstärkte Spannohr bei rotierenden Teilen eine zusätzliche Unwucht dar.

Weitere Maßnahmen zur Verstärkung des Spannohrs sind aus US 5,111,555 bekannt. Dort ist vorgesehen, das Spannohr doppellagig auszuführen oder wiederum durch außen aufgesetzte Spangen oder Bügel zu verstärken. Dabei ergeben sich die geschilderten Nachteile.

Aus WO 02/50468 A1 ist eine Schlauchklemme mit einem Klemmband, einer ohrartigen Spanneinrichtung und einer Vertiefung zur Führung der Spanneinrichtung bekannt.

### Abriss der Erfindung

Der Erfindung liegt die generelle Aufgabe zugrunde, Nachteile, wie sie bei bekannten Schlauchklemmen mit ohrartiger Spanneinrichtung auftreten, mindestens teilweise zu beseitigen. Eine speziellere Aufgabe der Erfindung kann darin gesehen werden, eine Schlauchklemme mit einer ohrartigen Spanneinrichtung zu schaffen, deren Haltekraft im gespannten Zustand erhöht ist.

Insbesondere soll der Tendenz des Spannohrs, sich nach dem Spannen wieder aufzuweiten, entgegengewirkt werden.

Die Lösung dieser Aufgabe gelingt mit der in Anspruch 1 angegebenen Maßnahme. Die danach vorgesehene Vertiefung bewirkt, dass beim Verengen des Spannohrs und der dadurch bewirkten Durchmesserverkleinerung der Schlauchklemme Schlauchmaterial in die Vertiefung eintritt. Bei der durch die Verengung des Spannohrs bewirkten Relativverschiebung zwischen dem Klemmband und dem Schlauch kann sich zunehmend Schlauchmaterial in die in dieser Bewegungsrichtung breiter werdende Vertiefung schieben. Wird am Ende des Spannvorgangs das Spannwerkzeug von dem Spannohr abgenommen, so tritt eine gegenläufige Relativverschiebung zwischen Klemmband und Schlauch statt. Dabei wird das in die Vertiefung eingetretene Schlauchmaterial in Richtung der geringer werdenden Breite der Vertiefung gedrängt und dort eingeklemmt, wodurch die gegenläufige Bewegung behindert wird. Mit anderen Worten kann sich das Spannohr nicht mehr so stark aufweiten, wie es aufgrund seiner Elastizität zu erwarten wäre.

Die in Anspruch 2 bis 4 angegebenen Gestaltungen der Vertiefung haben sich als besonders wirksam erwiesen.

Die Maßnahme des Anspruchs 5 ist insofern zweckmäßig, als die erläuterte Relativverschiebung zwischen Klemmband und Schlauch nahe der Spanneinrichtung am größten ist.

Anspruch 6 bezieht sich auf die Anwendung der erfindungsgemäßen Maßnahme auf eine offene Schlauchklemme, deren Endabschnitte einander überlappen, wobei die Spanneinrichtung in einem Bereich des äußeren Endabschnitts angeordnet ist, der den inneren Endabschnitt überlappt.

Bei einer derartigen offenen Schlauchklemme ist es gemäß Anspruch 7 besonders günstig, die Vertiefung in dem Teil des inneren Klemmband-Endabschnitts unterhalb des Spannohrs vorzusehen, weil dort die Relativverschiebung zwischen Klemmband und Schlauch am größten ist. Gleichzeitig bewirkt die Verformung des Klemmbandmaterials an dieser Stelle eine Versteifung, die einem Auswölben des Klemmbandes unter dem Spannohr entgegenwirkt.

In der Weiterbildung der Erfindung nach Anspruch 8 kann die die Vertiefung bildende nach außen ragende Prägung in Verbindung mit dem Spannohr eine zusätzliche Sicherung des Klemmbandes unter dem Spannohr bewirken. Diese Funktion wird insbesondere dann möglich, wenn das Spannohr gemäß Anspruch 9 eine nach innen ragende Versteifungssicke aufweist.

### Kurzbeschreibung der Zeichnung

Ein Ausführungsbeispiel der Erfindung wird nachstehend anhand der Zeichnung näher erläutert. In der Zeichnung zeigt
Fig. 1 eine Seitenansicht einer offenen Schlauchklemme in einer dem montierten Zustand entsprechenden Zustand, in dem die beiden Klemmbandenden einander überlappen und aneinander fixiert sind, das Spannohr aber noch nicht verengt ist,
Fig. 2 eine Draufsicht auf den gemäß Fig. 1 inneren Klemmband-Endabschnitt und
Fig. 3 einen vergrößerten Längsschnitt durch den inneren Klemmband-Endabschnitt.

### Beschreibung von Ausführungsbeispielen

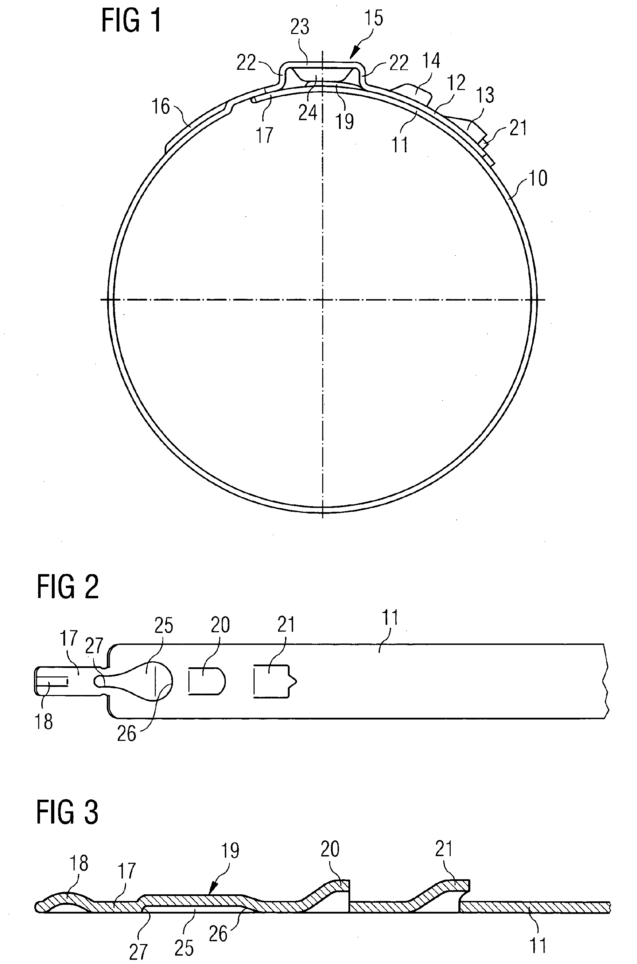

Die in der Zeichnung dargestellte offene Schlauchklemme besteht aus einem Klemmband **10,** das in dem in Fig. 1 gezeigten Zustand einen inneren Endabschnitt **11** und einen diesen überlappenden äußeren Endabschnitt **12** bildet. In dem äußeren Endabschnitt **12** sind, ausgehend von dem in Fig. 1 rechten Ende, eine Führungsaufnahme **13,** eine Halteaufnahme **14,** eine Spanneinrichtung **15** in Form eines sogenannten "Oetiker-Ohrs" und eine Zungenführung **16** durch Kaltverformen ausgebildet. In dem auch in Fig. 2 und 3 dargestellten inneren Endabschnitt **11** des Klemmbandes **10** sind, ausgehend von dessen freiem Ende, eine Zunge **17** mit gegenüber dem vollen Klemmband **10** verringerter Breite und einer Führungsnase **18,** eine in der Draufsicht der Fig. 2 tropfenförmige Ausprägung **19,** ein Haltehaken **20** und ein Führungshaken **21** ausgebildet.

Das Spannohr **15** wird von zwei aus dem Klemmband **10** nach außen gekröpften Schenkeln **22** und einem diese verbindenden Stegabschnitt **23** gebildet. In dem Stegabschnitt **23** ist eine nach außen konkave Versteifungssicke **24** eingeformt.

Mit Ausnahme der Ausprägung **19** kann die Schlauchklemme dieses Ausführungsbeispiels mit der aus WO 2009/152832 A1 bekannten Schlauchklemme übereinstimmen.

In dem vorliegenden Ausführungsbeispiel hat die Ausprägung **19** gemäß Fig. 2 die Form eines vom inneren Klemmbandende zur Klemmbandmitte hin fallenden Tropfens, das heißt, dass sich ihre quer zur Längsrichtung des Klemmbandes **10** gemessenen Breite von der in Fig. 2 rechts anzunehmenden Klemmbandmitte aus zum linken Klemmbandende hin verjüngt, wobei beide Enden verrundet sind. Die Tiefe der durch die Ausprägung **19** gebildeten, zur Innenseite der Schlauchklemme hin konkaven Vertiefung **25** ist im Wesentlichen gleich der Dicke des Klemmbandes **10,** was bedeutet, dass die Ausprägung **19,** wie in Fig. 3 gezeigt, an der Außenseite des inneren Endabschnitts **11** eine Höhe hat, die etwa der Dicke des Klemmbandes entspricht.

Die größte Breite der Vertiefung **25** beträgt etwa 1/2, ihre kleinste Breite etwa 1/10 bis 1/5 der Klemmbandbreite. Wie aus Fig. 3 ersichtlich, weist die Innenwand der Vertiefung **25** an ihrem in Fig. 3 rechten Ende eine flache Anlaufschräge **26,** am entgegengesetzten Ende eine steile Auslaufschräge **27** auf.

Wie in Fig. 1 gezeigt, kann die in dem Stegabschnitt **23** des Spannohrs **15** vorhandene Versteifungssicke **24** so dimensioniert sein, dass sie in dem gezeigten Zustand die Ausprägung **19** berührt. Das Spannohr **15** stützt dann den mit der Ausprägung **19** versehenen Bereich des Klemmbandes **10** gegen ein Auswölben ab.

Wird das Spannohr **15** aus dem in Fig. 1 gezeigten Ausgangszustand etwa mittels einer an den beiden Schenkeln **22** angesetzten (nicht gezeigten) Zange verengt, so verringert sich der Durchmesser der Schlauchklemme und übt auf den (nicht dargestellten) Schlauch, der zwischen dem Klemmband **10** und dem von ihm umgebenen Gegenstand, etwa einem Rohrnippel, angeordnet ist, Druck aus. Gleichzeitig findet wegen der Durchmesserverringerung der Schlauchklemme zwischen dem Klemmband **10** und dem Schlauch eine Relativverschiebung statt, die im Bereich des Spannohrs **15** am stärksten ist und zur Klemmbandmitte hin, das heißt in Richtung des dem Spannohr **15** diametral gegenüberliegenden Bereichs, abnimmt. Der auf den Schlauch ausgeübte Druck und die beschriebene Relativverschiebung führen dazu, dass das Schlauchmaterial in die Vertiefung **25** gedrückt wird.

Wird die Zange entfernt, so bewirkt die Elastizität des Schlauchs und auch des an sich unelastisch verformten Spannohrs **15,** das sich dieses etwas weitet. Dabei findet zwischen dem Schlauch und dem Klemmband **10** eine gegenläufige Relativverschiebung statt, bei der das in die Vertiefung **25** eingedrückte Schlauchmaterial in Richtung der kleineren Breite der Vertiefung **25** gedrückt und dort eingeklemmt wird. Diese Einklemmung begrenzt die sonst stattfindende größere Aufweitung des Spannohrs **15.**

Dabei läßt die an dem in Fig. 3 rechten Ende vorhandene Auslaufschräge **26** der Vertiefung **25** das zu komprimierende Schlauchmaterial während der Schließung in Richtung der Schließbewegung ausgleiten, um eine etwaige Bremswirkung während der Ohrschließung zu vermeiden. Demgegenüber erhöht bei Entfernen der Zange und der beginnenden Rückfederung des Spannohrs **15** die steilere Auslaufschräge **27** an dem schmaleren und möglicherweise tieferen schmale Ende der Vertiefung **25** die Kompressions- und Bremswirkung des komprimierten Schlauchmaterials.

An einer Schlauchklemme mit einem Nenndurchmesser von 60 mm, einer Klemmbandbreite von 10 mm, einer Banddicke von 0,8 mm und einer in Umfangsrichtung gemessenen Länge des Spannohrs **15** von 13 mm wurden Versuche mit einer Zangen-Schließkraft von 6.400 N durchgeführt. Bei einer Schlauchklemme mit der Vertiefung **25** wurden nach Entfernen der Zange eine mittlere Länge des unter dem Spannohr **15** vorhandenen Schließspaltes von 3,03 mm, eine von der Schlauchklemme auf den Schlauch ausgeübte Gesamtradialkraft von 4.400 N und eine mittlere Flächenpressung von 2,45 N/mm² gemessen. Bei der Ermittlung der Gesamtradialkraft wurde an acht gleichmäßig am Umfang angeordneten Sensoren eine mittlere Kraft von 550 N gemessen.

Bei einer Klemme ohne die Vertiefung **25** aber im übrigen gleichen Dimensionen wurden unter gleichen Versuchsbedingungen eine mittlere Länge des Schließspaltes von 3,25 mm, eine mittlere Radialkraft von 3.840 N und eine mittlere Flächenpressung von 2,17 N/mm² gemessen. Dies entspricht in Bezug auf die nach Entfernen der Zange von der Schlauchklemme ausgeübte Radialkraft eine Erhöhung um rund 14%.

Diese Verbesserung bedeutet, dass in vielen Fällen statt des üblicherweise verwendeten hochfesten Edelstahls ein billigerer Stahl eingesetzt werden kann, um die jeweils geforderte Dichtigkeit zu erreichen. Da bei Schlauchklemmen dieser Art der Materialeinsatz bis zu 85% der Gesamtkosten ausmacht, stellt die durch die Erfindung erreichte Erhöhung der Haltekraft eine hohe Einsparung dar.

Statt der oben beschriebenen Tropfenform kann die Vertiefung **25** auch beispielsweise eine im Wesentlichen dreieckige Form mit verrundeten Ecken haben, wobei die Breite stets von der Klemmbandmitte aus zum inneren Klemmbandende hin abnimmt.

Die oben beschriebene Position der Vertiefung **25** in dem unter dem Spannohr **15** gelegenen Bereich des inneren Klemmband-Enabschnitts **11** ist aus den erläuterten Gründen besonders zweckmäßig. Grundsätzlich kann die Vertiefung aber auch an anderen Stellen des Klemmbandes **10,** auch in einem an dem Schlauch anliegenden Bereich des äußeren Endabschnitts **12,** angeordnet sein. Da die Relativverschiebung zwischen Schlauch und Klemmband **10** im Bereich des Spannohrs **15** am größten ist, sollte die Vertiefung **25** diesem mindestens benachbart sein.

### Bezugszeichenliste

- **10**: Klemmband
- **11**: innerer Endabschnitt
- **12**: äußerer Endabschnitt
- **13**: Führungsaufnahme
- **14**: Haltaufnahme
- **15**: Spannohr
- **16**: Zungenführung
- **17**: Zunge
- **18**: Führungsnase
- **19**: Ausprägung
- **20**: Haltehaken
- **21**: Führungshaken
- **22**: Schenkel
- **23**: Stegabschnitt
- **24**: Versteifungssicke
- **25**: Vertiefung
- **26**: Anlaufschräge
- **27**: Auslaufschräge

## Patentansprüche

1. Schlauchklemme mit einem Klemmband **(10),** in dem eine ohrartige Spanneinrichtung **(15)** mit zwei nach außen ragenden Schenkeln **(22)** und einem diese verbindenden Stegabschnitt **(23)** ausgebildet ist, wobei das Klemmband **(10)** an seiner Innenseite in einem Bereich, der im gespannten Zustand auf dem Schlauch zu liegen kommt, eine Vertiefung **(25)** aufweist, deren Rand vollständig innerhalb des Klemmbandes **(10)** liegt,
**dadurch gekennzeichnet, dass** die Breite der Vertiefung **(25)** von der in Bandlängsrichtung gemessenen Klemmbandmitte weg stets abnimmt, d.h. sich verjüngt, wobei beide Enden der Vertiefung verrundet sind.

2. Schlauchklemme nach Anspruch 1, wobei die Vertiefung **(25)** die Form eines auf die Klemmbandmitte zu fallenden Tropfens hat.

3. Schlauchklemme nach Anspruch 1 oder 2, wobei die Umfangswand der Vertiefung **(25)** an ihrem breiten Ende flach und an ihrem schmalen Ende steil ist.

4. Schlauchklemme nach einem der vorhergehenden Ansprüche, wobei die Vertiefung **(25)** an ihrem schmalen Ende tiefer ist als an ihrem breiten Ende.

5. Schlauchklemme nach einem der vorhergehenden Ansprüche, wobei die Vertiefung **(25)** nahe der Spanneinrichtung **(15)** angeordnet ist.

6. Schlauchklemme nach einem der vorhergehenden Ansprüche, wobei die Enden des Klemmbandes **(10)** im montierten Zustand einen inneren Endabschnitt **(11)** und einen diesen überlappenden äußeren Endabschnitt **(12)** bilden und die Spanneinrichtung **(15)** in einem von dem inneren Endabschnitt **(11)** überlappten Bereich des äußeren Endabschnitts **(12)** angeordnet ist.

7. Schlauchklemme nach Anspruch 6, wobei die Vertiefung **(25)** in demjenigen Teil des Klemmbandes **(10)** angeordnet ist, der den im montierten Zustand der Schlauchklemme vorhandenen Abstand zwischen den Schenkeln **(22)** der Spanneinrichtung **(15)** überbrückt.

8. Schlauchklemme nach Anspruch 7, wobei die Vertiefung **(25)** als an der Außenseite des Klemmbandes **(10)** vorspringende Ausprägung **(19)** ausgebildet ist.

9. Schlauchklemme nach Anspruch 8, wobei der Stegabschnitt **(23)** der ohrartigen Spanneinrichtung **(15)** durch eine nach außen konkave Sicke **(24)** versteift ist.

## Claims

1. A hose clamp including a clamping band **(10)** in which an ear-like tightening device **(15)** having two outward extending legs **(22)** and a web portion **(23)** interconnecting the legs is formed, wherein the inner side of the clamping band **(10)** has a recess **(25)** in an area which, in the tightened condition, lies upon the hose, the recess having its boundary entirely within the clamping band **(10),**
**characterised in that** the width of the recess **(25)** always decreases starting from the centre of the clamping band as measured in the longitudinal direction of the band, i.e. tapers, wherein both ends of the recess are rounded.

2. The hose clamp of claim 1, wherein the recess **(25)** has the shape of a drop falling toward the centre of the clamping band.

3. The hose clamp of claim 1 or 2, wherein the surrounding wall of the recess (25) is shallow at its wider end and steep at its narrower end.

4. The hose clamp of any preceding claim, wherein the recess **(25)** is deeper at its narrow end than at its wide end.

5. The hose clamp of any preceding claim, wherein the recess **(25)** is disposed near the tightening device **(15).**

6. The hose clamp of any preceding claim, wherein the ends of the clamping band **(10)** in the mounted condition form an inner band portion **(11)** and an outer end portion **(12)** overlapping the inner end portion, and the tightening device **(15)** is disposed in an area of the outer end portion **(12)** overlapped by the inner end portion **(11).**

7. The hose clamp of claim 6, wherein the recess **(25)** is disposed in that part of the clamping band **(10)** which in the mounted condition of the hose clamp bridges the space between the legs **(22)** of the tightening device **(15).**

8. The hose clamp of claim 7, wherein the recess **(25)** is formed as an embossment **(19)** projecting from the outer side of the clamping band **(10).**

9. The hose clamp of claim 8, wherein the web portion **(23)** of the ear-like tightening device **(15)** is stiffened by an outward concave bead **(24).**

## Revendications

1. Collier de serrage pour tuyau comportant une bande de serrage (10), dans laquelle est formé un dispositif de serrage (15) en forme d'oreille, ayant deux branches (22) faisant saillie vers l'extérieur et une partie de pont (23) reliant celles-ci, dans lequel la bande de serrage (10) comporte sur son côté intérieur dans une zone qui, à l'état serré, se situe sur le tuyau, un évidement (25) dont le bord est entièrement à l'intérieur de la bande de serrage (10),
**caractérisé en ce que** la largeur de l'évidement (25) diminue, c'est-à-dire qu'elle s'amincit, constamment à partir et en éloignement du centre de la bande de serrage mesuré dans la direction longitudinale de la bande, les deux extrémités de l'évidement étant arrondies.

2. Collier de serrage pour tuyau selon la revendication 1, dans lequel l'évidement (25) a la forme d'une goutte tombant sur le centre de la bande de serrage.

3. Collier de serrage pour tuyau selon la revendication 1 ou 2, dans lequel la paroi périphérique de l'évidement (25) est plate sur son extrémité large et à forte pente sur son extrémité étroite.

4. Collier de serrage pour tuyau selon l'une des revendications précédentes, dans lequel l'évidement (25) est plus profond à son extrémité étroite qu'à son extrémité large.

5. Collier de serrage pour tuyau selon l'une des revendications précédentes, dans lequel l'évidement (25) est agencé à proximité du dispositif de serrage (15).

6. Collier de serrage pour tuyau selon l'une des revendications précédentes, dans lequel les extrémités de la bande de serrage (10) forment, à l'état monté, une partie d'extrémité intérieure (11) et une partie d'extrémité extérieure (12) chevauchant celle-ci, et le dispositif de serrage (15) est agencé dans une zone de la partie d'extrémité extérieure (12) chevauchée par la partie d'extrémité intérieure.

7. Collier de serrage pour tuyau selon la revendication 6, dans lequel l'évidement (25) est agencé dans la partie de la bande de serrage (10) qui, à l'état monté, forme un pont dans l'espace prédéfini du collier de serrage pour tuyau entre les branches (22) du dispositif de serrage (15).

8. Collier de serrage pour tuyau selon la revendication 7, dans lequel l'évidement (25) est formé comme un bossage (19) faisant saillie sur le côté extérieur de la bande de serrage (10).

9. Collier de serrage pour tuyau selon la revendication 8, dans lequel la partie de pont (23) du dispositif de serrage (15) en forme d'oreille est rigidifiée par une moulure concave vers l'extérieur (24).
